# EUROPÄISCHE PATENTSCHRIFT

(11) **EP 0 819 578 B1**
(45) Veröffentlichungstag und Bekanntmachung des Hinweises auf die Patenterteilung: **02.01.2002**
(21) Anmeldenummer: 97110116.7
(22) Anmeldetag: 20.06.1997
(51) Int. Cl.: B60R 7/04, B60R 13/02

(54) **Formkörper für ein Fahrzeug**
Trim moulding for a vehicle
Pièce de moulage pour un véhicule

(30) Priorität: 16.07.1996 DE 19628625
(43) Veröffentlichungstag der Anmeldung: 21.01.1998
(73) Patentinhaber: Volkswagen Aktiengesellschaft, 38436 Wolfsburg (DE)
(72) Erfinder: Hofmann, Gustav, 31275 Hämelerwald (DE); Westphal, Torsten, 29379 Wittingen (DE)

(56) Entgegenhaltungen:
- EP-A- 0 184 620
- DD-A- 245 849
- DE-A- 4 330 439
- DE-B- 1 275 376
- FR-A- 2 719 271
- US-A- 4 619 477

## Beschreibung

Die Erfindung betrifft einen Formkörper für ein Fahrzeug.

Ablagemulden in Fahrzeugen sind in sehr unterschiedlichen Ausführungsformen bekannt. Übliche Anbringungsorte sind beispielsweise Ober- und Unterseiten von Instrumententafeln, Hohlräume in Mittelkonsolen, Türverkleidungen, Aufbauten auf dem sogenannten Mitteltunnel, Hutablagen. Gelegentlich befinden sich Ablagemulden auch an Vordersitzen, deren Sitzteilrahmen von Verkleidungselementen bedeckt sind. In diese sind die Ablagemulden eingeformt.

Durch offenkundige Vorbenutzung in einem Fahrzeug mit der Bezeichnung "Mini 850" ist im übrigen ein Freiraum zwischen einem Rückbanksitzteil und einer Seitenverkleidung bekannt Die Begrenzung dieses Freiraums erfolgt durch mehrere aneinanderliegende Einzelbauteile, die auf Stoß liegen und so verschmutzungsanfällige Ritzen bilden und nicht flüssigkeitsdicht sind.

Der Erfindung liegt die Aufgabe zugrunde, innerhalb der Insassenzelle eines Fahrzeugs in einem Rücksitzbereich eine Ablagemulde so zu gestalten, daß ohne Komforteinbußen für die Fahrzeuginsassen vorstehend beschriebene Nachteile vermieden werden.

Diese Aufgabe wird gelöst mit den Merkmalen des Patentanspruchs 1.

Erfindungsgemäß wird also wenigstens eine Ablagemulde als Bestandteil eines als Innenverkleidungselement ausgebildeten Formkörpers zwischen einem Seitenwandteil des Fahrzeugs einerseits und einem Sitzteil einer Rücksitzbank oder eines Fahrzeugrücksitzes andererseits vorgesehen, und zwar vorzugsweise nach Art einer glattwandig ausgeführten und nach oben offenen Schale, die im Bereich der Ablagemulde geschlossen ist Diese Art der Unterbringung für die Ablagemulde beruht auf der erfinderseitigen Erkenntnis, daß insbesondere bei bauchig ausgeführten Seitenwandteilen von Fahrzeugen für aufrecht sitzende Fahrzeuginsassen zwischen dem Gesäßbereich und dem Seitenwandteil ein zur Unterbringung eines Formkörpers geeignetes Innenraumvolumen verbleibt, das jedenfalls für den Sitzkomfort nicht unbedingt benötigt wird. Außerdem kann bei Kleinstfahrzeugen der sogenannten Sub-Kompakt-Klasse beobachtet werden, daß auf den Rücksitzen kaum erwachsene Fahrzeuginsassen, sondern überwiegend Kinder mitgeführt werden. Diese beanspruchen jedoch im allgemeinen keine große Sitzbreite und lassen so bei ordnungsgemäßer Unterbringung auf dem Rücksitz ebenfalls einen Freiraum zwischen sich und der Seitenwand. In vorteilhafter Weise kann nun gerade für Kinder die erfindungsgemäß angeordnete Ablagemulde zur Unterbringung von Spielgeräten, Verpflegung und kleinkindspezifischen Hygieneartikeln genutzt werden. Durch eine geschickte Anpassung des vorzugsweise ebenfalls glattwandig ausgeführten Oberflächenrandes der Ablagemulde an die Kontur des Sitzteils kann darüber hinaus dafür gesorgt werden, daß auch bei Unterbringung korpulenterer Fahrzeuginsassen auf der Rücksichtbank der die Ablagemulde enthaltende Formkörper als Ergänzung des Sitzteils wirksam ist.

Von herausgehobener Bedeutung ist die Nutzung des die Ablagemulde enthaltenden Formkörpers für weitere Zusatzfunktionen. So kann beispielsweise durch eine angeformte Seitenwand eine umklappbare Rücksitzbank eindeutig in ihrer Querlage fixiert werden. Ein Befestigungsbeschlag für ein Beckengurtelement kann unterhalb des Formkörpers verborgen sein und wird so daran gehindert durch Scheuerbeanspruchung auf den Polsterkörper oder Sitzteilbezug des Rücksitzes einzuwirken. Gemäß einer weiteren vorteilhaften Ausgestaltung ist ein Wandabschnitt des Formkörpers so ausgebildet, daß gleichzeitig auch der Gurtauf-Wickelautomat für Vordersitzsicherheitsgurte im Bereich der sogenannten B-Säule abgedeckt sind. Neben der zusätzlichen Bedeckung der B-Säule besteht weiterhin die Möglichkeit, auch andere Verkleidungselemente wie beispielsweise Türschwellerverkleidungen, Radhausabdeckungen oder dergleichen zu fixieren. Für die Anbindung an derartige weitere Verkleidungsteile und auch für die Befestigung des Formkörpers im Bereich der Seitenwand können entsprechende Rastmittel direkt angeformt sein, wenn der Formkörper beispielsweise durch ein Kunststoff-Spritzverfahren hergestellt wird. Die Elastizität des Kunststoffes ermöglicht dabei die zur Herstellung einer Klemmbefestigung notwendigen Bewegungen von Rastmitteln in entsprechende Rastgeometrien hinein, die am Fahrzeugaufbau oder an anderen Verkleidungsteilen vorgesehen sind. Ein derartig ausgebildeter Formkörper erleichtert nicht nur die Montage von Verkleidungsteilen im Fahrzeuginsassenraum, sondern bringt auch einen deutlichen Gewinn für die Innenraumoptik im hinteren Bereich der Fahrzeuginsassenzelle. Dazu trägt insbesondere die glattwandige Gestaltung bei, weil diese eine problemlose Entfernung von Schmutzpartikeln und ausgelaufenen Flüssigkeiten ohne großen Aufwand ermöglicht.

Ein vorteilhaftes Ausführungsbeispiel der Erfindung ist in der Zeichnung dargestellt Es zeigt
- Figur 1:: in einem Ausschnitt den Fahrgastraum mit einem erfindungsgemäßen Formkörper,
- Figur 2:: den eine Ablagemulde enthaltenden Formkörper, der in dem Fahrzeug gemäß Figur 1 verbaut ist, in einer perspektivischen Ansicht von schräg vorn und
- Figur 3:: den Formkörper gemäß Figur 2 in einer Draufsicht.

Gleiche Bauteile oder Bauteilabschnitte weisen in allen Figuren die gleiche Bezifferung auf.

Man erkennt in Figur ein ausschnittsweise dargestelltes Fahrzeug 1, bei dem in Hinblick auf das erfindungsgemäße Ausführungsbeispiel von den Karosserieteilen eine Seitenwand 2, eine B-Säule 3 und ein Türschweller 4 von Interesse sind. Zur Innenausstattung gehört ein Sitzteil 5 eines hier nicht weiter dargestellten Fahrzeugsitzes, eine Radhausverkleidung 6, ein Seitenwanddekorteil 7, sowie ein Sicherheitsgurt 8, der in konventioneller Weise in einen Aufrollautomaten 9 einläuft. Weiter zu nennen ist ein Beckengurtabschnitt 10 mit einem Gurtschloß 11, der in an sich bekannter Weise über einen Befestigungsbeschlag am Fahrzeugaufbau gehalten ist Zwischen dem ein Fenster 12 aufweisenden Seitenwandteil 2 und dem Sitzteil 5 ist ein insgesamt mit 13 bezeichneter Formkörper angeordnet, der eine hier wannenartig gestaltete Ablagemulde 14 aufweist.

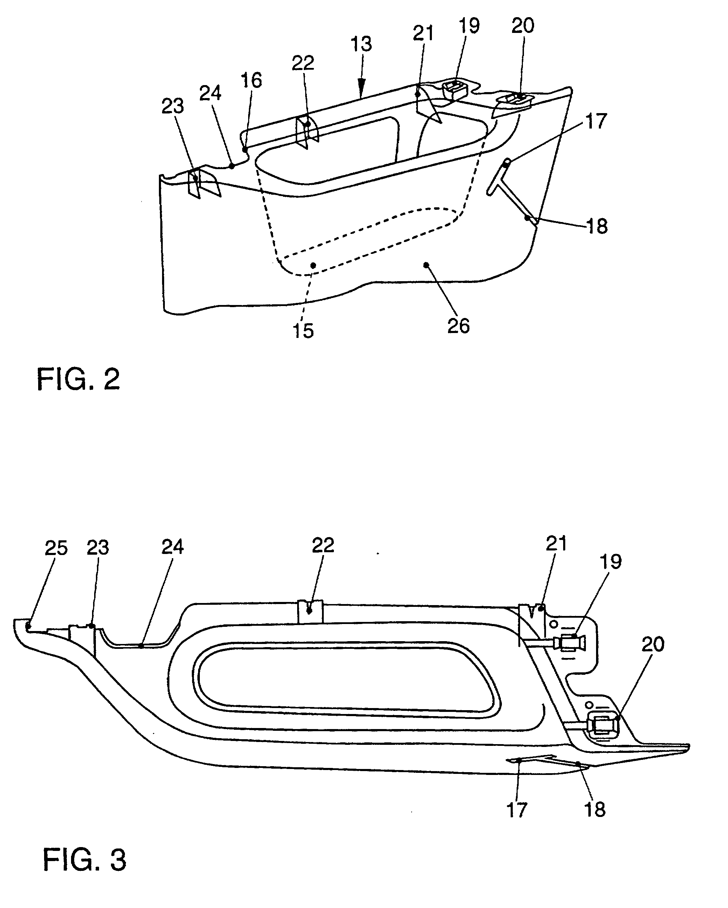

Die im einzelnen in den Formkörper 13 integrierten Funktionen werden nun anhand der Figuren 2 und 3 näher beschrieben. Zunächst ist darauf hinzuweisen, daß die Tiefe der Ablagemulde 14 so gewählt ist, daß ein Bodenbereich 15 in etwa in einem Bereich der unteren Kante des Sitzteils 5 und ein oberer Rand 16 in etwa im Bereich der Oberkante des Sitzteils 5 verläuft. Durch diese Maßnahme'wird sichergestellt, daß gerade auch für kleinwüchsige Personen ein relativ großes Ablagevolumen leicht zugänglich ist. Im Unterschied zu Ablagefächern, die bei viertürigen Fahrzeugen in Verkleidungen der hinteren Türen zugeordnet sind, ist also eine verbesserte Zugänglichkeit gewährleistet, weil keine umständlichen Vorbeugebewegungen notwendig sind.

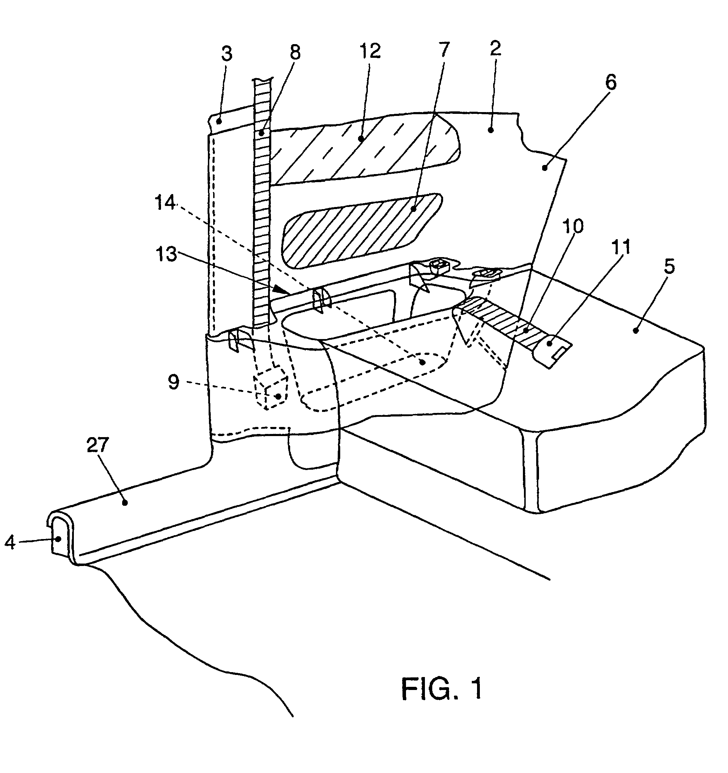

Für die Durchführung des Beckengurtabschnittes 10 ist in dem Formkörper 13 eine schtitzartig ausgeführte Öffnung 17 vorgesehen, auf die hier in etwa rechtwinklig ein Einführschlitz 18 zuläuft. Erste Rastmittel 19 und 20 in Gestalt von Clipshaken sind in einem rückwärtigen Bereich vorgesehen, um so beispielsweise die mit entsprechenden Gegenrastprofilen versehene Radhausverkleidung 6 lösbar ankoppeln zu können. Als zweite Rastmittel sind hier Rastprofile 21 bis 23 vorgesehen, mit denen der Formkörper 13 seinerseits an dem Seitenwandteil 2 und an der B-Säule 3 arretierbar ist. Für den Durchtritt des Sicherheitsgurtes 8 ist eine Rücksetzung 24 vorgesehen. Als drittes Rastmittel ist eine Klemmnase 25 vorgesehen, welche je nach Gestaltung des Türbereiches entweder einen Stegflansch der B-Säule 3 oder einen auf diesem Stegflansch befestigten Keder hintergreift. Befestigungsfunktionen für andere Verkleidungsteile übernimmt auch eine Seitenwand 26, die mit ihrer Außenseite dem Sitzteil 5 zugewandt ist. So kann beispielsweise durch Überlappung mit einer Schwellerverkleidung 27 (siehe Figur 1) ein weiteres Innenverkleidungsteil festgelegt werden. Die Seitenwand 26 dient nicht nur dem Sitzteil 25 als seitliche Führung, sondern übernimmt auch die Funktion eines Abdeckungsgehäuses, und zwar sowohl für den - nicht dargestellten - Befestigungsbeschlag des Beckengurtabschnittes 10 als auch für den Gurtaufroller 9.

Die Erfindung ist nicht auf das in der Zeichnung dargestellte Ausführungsbeispiel beschränkt. So kann beispielsweise auch noch eine Anbindung an das Seitenwandteil 7 vorgesehen werden, wenn dieses in den Bereich der Ablagemulde hineingezogen werden soll. Auch die Geometrie der Ablagemulde selbst kann verändert werden. Anstelle einer ovalen Wanne können auch zwei oder mehrere topfförmige Mulden hintereinander angeordnet werden, um so beispielsweise Getränkebecher oder Getränkedosen sicher positionieren zu können. Der Formkörper 13 kann darüber hinaus auch mit elektrischen Steckkontakten versehen werden, die den Anschluß elektrischer Kleingeräte wie Gameboys oder tragbarer Audiogeräte an das elektrische Bordnetz ermöglichen.

## Patentansprüche

1. Formkörper für ein Fahrzeug, wobei der Formkörper (13) als Innenverkleidungselement ausgeführt ist und im Formkörper (13) wenigstens eine vorzugsweise zur Aufbewahrung von losen Gegenständen geeignete Ablagemulde (14) ausgebildet ist, die im Bereich einer seitlichen Erweiterung des Umrisses eines Sitzteils (5) einer Rücksitzbank oder eines Fahrzeugrücksitzes zwischen dem Sitzteil (5) einerseits und einem Seitenwandteil (2) des Fahrzeugs andererseits angeordnet ist.

2. Formkörper nach Anspruch 1, **dadurch gekennzeichnet, dass** der Formkörper wenigstens einen Funktionsabschnitt aufweist, der einem benachbarten Verkleidungselement (6, 27) oder einem Ausstattungsteil (8, 9, 10) zugeordnet ist.

3. Formkörper gemäß Anspruch 1 oder 2, **gekennzeichnet durch** eine schlitzartig ausgeführte Öffnung (17), die von einem Sicherheitsgurtband (10) durchdringbar ist.

4. Formkörper einem der Ansprüche 1 bis 3, **gekennzeichnet durch** eine dem Sitzteil (5) zugewandte und an dieser zumindest abschnittsweise anlegbare Seitenwand (26).

5. Formkörper gemäß einem der Ansprüche 1 bis 4, **dadurch gekennzeichnet, dass** ein Wandabschnitt vorgesehen ist, durch den ein Sicherheitsgurtaufroller (9) abgedeckt ist.

6. Formkörper gemäß einem der Ansprüche 1 bis 5, **gekennzeichnet durch** wenigstens ein erstes angeformtes Rastmittel am oberen Rand der Ablagemulde (14), an dem wenigstens ein mit einem entsprechenden Gegenrastmittel versehenes Verkleidungselement (6, 27) befestigbar ist.

7. Formkörper gemäß einem der Ansprüche 1 bis 6, **gekennzeichnet durch** wenigstens ein zweites angeformtes Rastmittel (21 - 23), das an der Seitenwand (2) oder an einem der Seitenwand (2) zugeordneten Anbauteil (7) arretierbar ist.

8. Formkörper gemäß einem der Ansprüche 1 bis 7, **gekennzeichnet durch** wenigstens ein drittes Rastmittel (25), das zur Verankerung an einem Halteflansch des Fahrzeugaufbaus oder an einem daran befestigten Keder hergerichtet ist.

9. Fahrzeug mit einem Formkörper nach einem der Ansprüche 1 bis 8.

## Claims

1. Moulded body for a vehicle, wherein the moulded body (13) is formed as an internal panelling element and in the moulded body (13) at least one storage recess (14) is formed which is preferably suitable for storing loose objects and which is disposed in the region of a lateral extension of the periphery of a seat part (5) of a rear bench seat or of a vehicle back seat between the seat part (5) on the one hand and a side wall part (2) of the vehicle on the other.

2. Moulded body according to claim 1, **characterised in that** the moulded body comprises at least one functional portion which is allocated to an adjacent panelling element (6, 27) or an equipment part (8, 9, 10).

3. Moulded body according to claim 1 or 2, **characterised by** an orifice (17) formed in a slit-like manner and which can have a safety belt band (10) passing through it.

4. Moulded body according to any one of claims I to 3, **characterised by** a side wall (26) facing the seat part (5) and able to be placed against this at least in part.

5. Moulded body according to any one of claims 1 to 4, **characterised in that** a wall portion is provided by which a safety belt take-up device (9) is covered.

6. Moulded body according to any one of claims 1 to 5, **characterised by** at least one first integrally-formed latching means on the upper edge of the storage recess (14), to which at least one panelling element (6, 27) provided with a corresponding counter-latching means can be attached.

7. Moulded body according to any one of claims 1 to 6, **characterised by** at least one second integrally-formed latching means (21-23) which can be locked on the side wall (2) or on an add-on part (7) allocated to the side wall (2).

8. Moulded body according to any one of claims 1 to 7, **characterised by** at least one third latching means (25) which is provided to anchor on a holding flange of the vehicle body or on a strip attached thereto.

9. Vehicle having a moulded body according to any one of claims 1 to 8.

## Revendications

1. Pièce moulée destinée à un véhicule, la pièce moulée (13) étant réalisée en tant qu'élément d'habillage intérieur et au moins un vide-poches (14) étant formé dans la pièce moulée (13), de préférence pour y placer des objets en vrac, et étant disposé dans la zone d'une extension latérale du contour d'une partie de siège (5) d'une banquette arrière ou d'un siège arrière de véhicule, entre la partie de siège (5) d'une part et une partie de paroi latérale (2) du véhicule d'autre part.

2. Pièce moulée selon la revendication 1, **caractérisée en ce que** la pièce moulée présente au moins une partie fonctionnelle, qui est associée à un élément de revêtement (6, 27) voisin ou à une partie d'équipement (8, 9, 10).

3. Pièce moulée selon la revendication 1 ou 2, **caractérisée par** une ouverture (17) réalisée à la manière d'une fente, et dans laquelle peut passer une courroie de ceinture de sécurité (10).

4. Pièce moulée selon l'une des revendications 1 à 3, **caractérisée par** une paroi latérale (26) dirigée vers la partie de siège (5) et applicable, du moins en partie, contre celle-ci.

5. Pièce moulée selon l'une des revendications 1 à 4, **caractérisée en ce qu'**il est prévu une partie de paroi permettant de recouvrir un enrouleur de ceinture de sécurité (9).

6. Pièce moulée selon l'une des revendications 1 à 5, **caractérisée par** au moins un premier moyen d'encliquetage formé d'un seul tenant au niveau du bord supérieur du vide-poches (14) et auquel peut être fixé au moins un élément de revêtement (6, 27) pourvu d'un moyen correspondant d'encliquetage de forme complémentaire.

7. Pièce moulée selon l'une des revendications 1 à 6, **caractérisée par** au moins un deuxième moyen d'encliquetage (21 à 23) formé d'un seul tenant, qui peut être bloqué au niveau de la paroi latérale (2) ou d'un élément rapporté (7) associé à la paroi latérale (2).

8. Pièce moulée selon l'une des revendications 1 à 7, **caractérisée par** au moins un troisième moyen d'encliquetage (25), qui est destiné à l'ancrage à un rebord de retenue de la carrosserie du véhicule ou à un bourrelet, fixé sur celui-ci.

9. Véhicule comportant une pièce moulée selon l'une des revendications 1 à 8.
